Europäisches Patentamt

European Patent Office

Office européen des brevets

(19)

(11) **EP 1 301 017 A1**

(12) # EUROPEAN PATENT APPLICATION

(43) Date of publication:
**09.04.2003 Bulletin 2003/15**

(51) Int Cl.⁷: **H04M 1/74**

(21) Application number: **01123667.6**

(22) Date of filing: **02.10.2001**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **Sony International (Europe) GmbH
10785 Berlin (DE)**

(72) Inventor: **Camuffo, Andrea,
Sony International (Europe) GmbH
85609 Aschheim-Dornach (DE)**

(74) Representative: **Körber, Martin, Dipl.-Phys. et al
Mitscherlich & Partner
Patentanwälte
Sonnenstrasse 33
80331 München (DE)**

(54) **Mobile communication device with electrostatic discharge protection**

(57) A protection against electrostatic discharge (ESD) is proposed for a mobile communication device comprising a transmitter circuitry for transmitting signals, a receiver circuitry for receiving signals, an antenna line, a switch (102) for connecting the antenna line either to the receiver circuitry or to the transmitter circuitry, and a protection circuit such as a transient voltage suppressor (106, 107, 108) to divert transient currents away from vulnerable circuitry whereby the switch (102) is in accordance with the also proposed method per default in the position in which it connects the antenna line to the receiver circuitry each time the mobile communication device is not in the transmitting mode, and the line connecting the switch (102) to the receiver circuitry is protected by the transient voltage suppressor (106, 107, 108).

Fig. 2

## Description

The present invention relates generally to the protection of electronic circuitry in communication devices against electrical overstress, particularly in communication devices using transmitting-receiving switchover circuit arrangements.

Electrostatic Discharge (ESD) is one of the most common sources of electrical overstress which produces transient voltages presenting a considerable hazard to mobile communication devices. The duration of ESD transients is typically in the range of less than 100 nanoseconds up to several microseconds. The voltages magnitude of the transients ranges from a few tens of volts up to more than 10kV.

Static electricity is commonly generated by friction between two different materials. Humans are typically charged up when walking over a floor with their shoe soles or just by body movements. On dry days, static charge built-up is usually higher than on days with high humidity, not only because dry materials are better insulators than wet ones but also because a moist human skin will drain off electrical charges continuously thereby minimising ESD effects.

Transients usually enter electronic circuits by conduction or, more likely, through radiation transferred by electromagnetic coupling. An antenna and/or an antenna jack of a mobile communication device have therefore to be considered as the most likely points of entry for ESD.

A transfer of electrostatic charge is most likely when the mobile device is in idle mode. That is, when a user picks it up from e.g. a table or pulls it from a bag or the like. At these occasions; the electrical potential of the user differs considerably from that of the phone causing a potential equalisation in form of an electrostatic discharge. A frequent occasion on which a mobile communication device is exposed to hazard is when it is connected to a hands free kit in a car. Hereby, the electrostatic charge built-up can discharge directly through the antenna connector.

Although transients last only for a fraction of a second, severe damage to the electronic circuitry of a mobile communication device is to be expected due to the high voltages involved. Usually, electronic circuitry is therefore protected by limiting the voltage spikes of an ESD which represent the actual hazard. This is achieved by using protection circuits such as transient voltage suppressors (TVS) which clamp the transient voltage to a value harmless for the exposed downstream circuitry.

The standard circuit arrangement to protect downstream electronics with transient voltage suppressors is to arrange them as close as possible to the point of entry of the ESD. But all currently known TVS's have a non-linear characteristic. A signal passing a TVS with a non-linear characteristic therefore is likely to be distorted. The discrepancy between a non-linear and a linear characteristic is considerable for higher amplitude signals and results in a non-acceptable distortion of these signals. That means, that when a mobile communication device is operated in transmission mode and a TVS is placed on the antenna line, the transmitted signals will be considerably distorted thereby reducing the quality of signal transmission.

It is therefore an object of the present invention to provide a mobile communication device with a protection against electrostatic discharge which does not influence the quality of signals being transmitted or received.

This object is achieved by a mobile communication device and a method as claimed in the respective main claims.

In particular, this object is achieved by a mobile communication device for a wireless communication system comprising a transmitter circuitry for transmitting signals, a receiver circuitry for receiving signals, an antenna line, a switch for connecting the antenna line either to the receiver circuitry or to the transmitter circuitry, and a protection circuit for protecting electronic circuitry of the mobile communication device from damage caused by an electrostatic discharge. The switch is per default in the position in which it connects the antenna line to the receiver circuitry if the mobile communication device is not in the transmitting mode, and the line connecting the switch to the receiver circuitry is protected by the protection circuit.

The above object is further achieved by a method for protecting a mobile communication device against damage caused by electrostatic discharge with the step of connecting the antenna line of the mobile communication device to the receiver circuitry of the mobile communication device each time the mobile communication device is not in transmitting mode, whereby the line connecting the antenna switch with the receiver circuitry is connected to a protection circuit for providing protection against electrostatic discharge

Advantageously, the protection circuit is a transient voltage suppressor (TVS).

In transmitting mode, the mobile communication device is not exposed to an electrostatic discharge because any charge built-up will already be discharged between a user or a hands free kit or the like before the device will be enabled to take up transmitting operations. Therefore no ESD protection is necessary for the transmitting mode and no signal distortion has thereby to be accepted. The signal levels in receiving mode are always small enough, so that the discrepancy of the characteristic of a TVS to a linear characteristic is negligible. Using a TVS to protect a receiver circuitry will therefore not cause significant signal distortions. The proposed mobile communication device thus provides a robust ESD protection whereby transmit signal attenuation and/or transmit signal distortion is avoided.

Further advantageous features are claimed in the respective sub-claims.

Preferably, the transient voltage suppressor is implemented using a PIN diode. The capacitance of PIN diodes is sufficiently low to prevent signal attenuation at very high transmission rates or signal frequencies, respectively.

Two PIN diodes can advantageously be arranged in antiparallel to form the transient voltage suppressor, so that protection against positive and negative transient pulses is achieved.

To avoid leak currents for direct current supply voltages or low frequency voltages over the transient voltage suppressor, preferably at least one PIN diode is arranged in series could be with a low frequency block. For blocking DC or low frequency currents with little circuital complexity, the low frequency block is implemented using a capacitance.

The proposed protection against ESD for mobile communication devices can be used in mobile phones, personal digital assistants (PDAs) etc. for wireless communication systems as the GSM system, and in not TDMA systems, such as the UMTS system where the antenna switch is replaced by a diplexer. the UMTS system and the like and particularly in mobile devices equipped with an antenna plug for a connection to a hands free kit, cordless phones, radio phones or any radio set for audio or data communication or the like where the antenna switch is replaced by a diplexer.

In the following description, the features, aspects, and advantages of the present invention will be better understood with respect to special embodiments and in relation to the enclosed drawings, in which

Fig. 1a shows the path of an ESD discharge on a layout of an unprotected printed circuit board of a mobile communication device,

Fig. 1b shows the path of a positive spike of an ESD discharge on a layout of a printed circuit board of a mobile communication device protected according to the present invention,

Fig. 1c shows the path of a negative spike of an ESD discharge on a layout of a printed circuit board of a mobile communication device protected according to the present invention, and

Fig. 2 is a circuit diagram of a protection circuit according to the present invention.

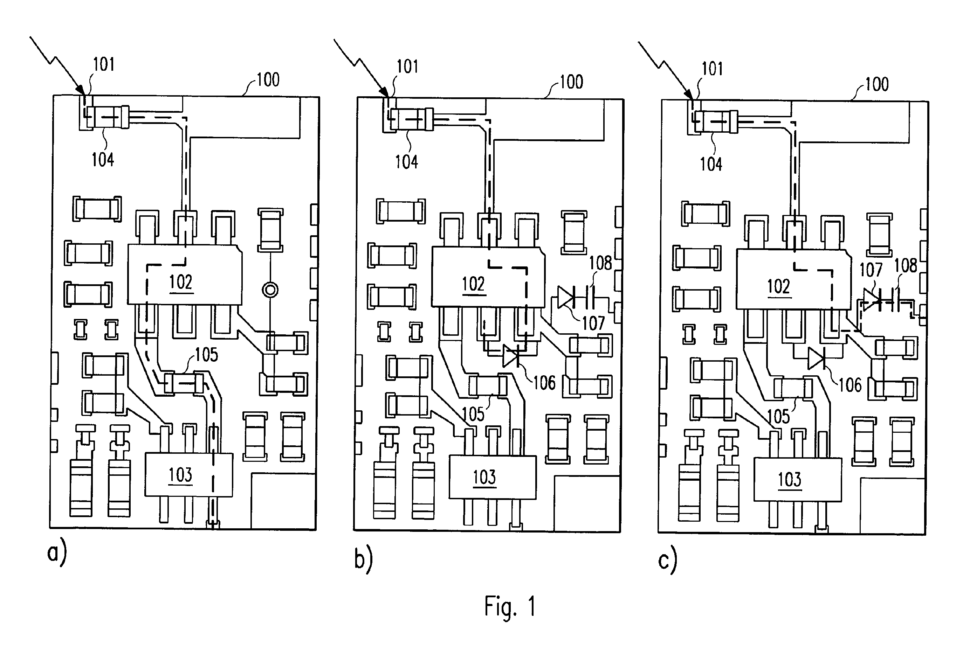

The dashed line in Figure 1a gives an indication of the path along which a transient from an electrostatic discharge (ESD) will propagate along the radio frequency (RF) line of an unprotected printed circuit board (PCB) 100 of a mobile communication device. The schematic of the printed circuit board layout shown in Figure 1a through 1c is just an example to illustrate the principles of the present invention. It is to be understood, that the circuit layouts may differ essentially from one mobile communication device to another, but that the present invention is applicable to any of those mobile communication devices using an antenna switch to alternately connect either the transmitter or the receiver circuitry to the antenna line.

When an ESD is induced through the antenna of a mobile communication device or when the electrostatic charge enters the device at an antenna connector, it reaches the printed circuit board of Fig. 1a at the RF connector 101. Due to its nature of being a RF signal, the ESD passes through the coupling capacitor 104 and propagates along the RF line through the antenna switch 102. The antenna switch itself is resistant to ESD so that the transient passes it without causing any damage. After leaving the antenna switch 102 the transient passes another coupling capacitor 105 which blocks off any supply voltage originating from the sensitive chip 103 or the transmission circuit of the mobile communication device. Finally, the transient from the ESD reaches the first chip 103 sensitive to electrical overstress and then propagates further to the transmitter circuit which is connected to the PCB 100 but not shown in Fig. 1a.

When the antenna switch is in the position to connect the antenna line to the RF connector with the receiver circuit which is not shown in Fig. 1a, the transient of the ESD will leave the antenna switch 102 by the right lead shown on the bottom of antenna switch 102 and propagate from there further into the receiver circuit connected to the PCB 100.

In the first case, the sensitive chip 103 and the transmitter circuit will suffer either a hard failure up to a charring of components, an upset caused e.g. by latch-up effects or a latent failure where the lethal failure is postponed to an unpredictable date. To protect the sensitive chip 103 and the transmitter circuitry from damage in consequence of an ESD, a transient voltage suppressor can be placed either between ground potential and the antenna line connecting the RF connector 101 with a lead of the antenna switch 102 or between ground potential and the transmitter RF line connecting the antenna switch 102 with the sensitive chip 103 and/or transmitter circuitry.

Unfortunately, the transmitting power is usually high so that the corresponding electrical signals have high amplitudes. A transient voltage suppressor will therefore be operated over a wide range of its non-linear characteristic causing a considerable and not acceptable distortion of the signals to be transmitted. Fortunately, a lethal surge pulse associated with an ESD is very unlikely while a mobile communication device is used in transmission mode. Like pointed out above, the most likely situations for exposing a mobile communication device to an ESD is the moment it is picked up or connected to a hands free kit like for instance in a car.

According to the present invention, the antenna switch 102 only connects the antenna line to the transmitter RF line when the mobile communication device is in transmitting mode. Thus it is achieved that the transmitter RF line and the components connected to it like e.g. the sensitive chip 103 and the transmitter circuitry are not exposed to hazard by ESD since they are always disconnected from the point of entry for an electrostatic discharge when there is a certain probability for an ESD happening.

By protecting the transmitter circuit in the above described way, the receiver circuit is now exposed to hazard from ESD whenever the mobile communication device is in idle mode. For protecting the receiver circuit, a transient voltage suppressor is placed between a ground potential and the receiver RF line connecting the antenna switch 102 with the receiver circuitry.

The strength of received signals is naturally weak and therefore the dynamic range of the amplitudes of its electrical correspondents will always be low. Other than in the above described case of using a protective component in a transmitter RF line, the electrical correspondents of the received signals thus only sweep a small range of the characteristic of a transient voltage suppressor. The aberration of the non-linear from a linear characteristic becomes negligible in this small range, so that a received signal quality will not be affected negatively as it would be in the above case for transmitting signals.

The described method of combining a switching of the antenna line to the receiver RF line whenever there is a probability that the mobile communication device might be exposed to an ESD with protecting the receiver RF line by a transient voltage suppressor allows a secure and robust protection of the circuitry in a mobile communication device which has no detrimental effect on the transmitting or receiving quality.

In principle, any type of transient voltage suppressor like e.g. a metal oxide varistor (MOV), a gas discharge tube (GDT), a thyristor, a rectifier, a diode or the like can be used to implement a protection circuit of the above described kind.

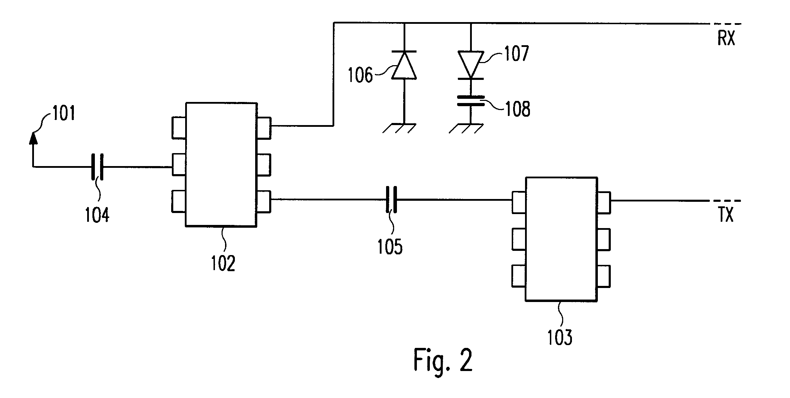

In a particular embodiment of the present invention similar to that shown in Fig. 2, a PIN diode 106 is used as a transient voltage suppressor. Due to the relatively long intrinsic zone between the p doped and the n doped layers, the capacity of a PIN diode is very low. A PIN diode connected between a RF line and ground potential therefore has only a minimal effect on RF signals. But when a voltage on the RF line exceeds the threshold or breakthrough voltage of the PIN diode like in the case of an ESD, the PIN diode becomes conductive and drains the surge to ground. The voltage rise on the RF line is thus limited to the threshold or breakthrough voltage, respectively, of the PIN diode which is harmless for the downstream electronics of the receiver circuitry.

Using just a single PIN diode as a transient voltage suppressor requires that the Zener effect causing the breakthrough of the diode is fast enough to limit voltage spikes on the RF line before sensitive components are exposed to electrical overstress. Alternatively also PIN diodes where an avalanche effect causes the breakthrough can be used.

The preferred embodiment of the present invention is shown in Fig. 2. Two PIN diodes 106 and 107 are connected in antiparallel between the receiver RF line and ground. This ensures that the PIN diodes are always operated in forward bias mode and will therefore in any case be fast enough to protect downstream sensitive components from electrical overstress in time.

A decoupling capacitor 108 is connected in series with one of the PIN diodes to avoid power loss in consequence of DC supply current leaking over one of the diodes. In Fig. 2 a decoupling capacitor 108 is connected in series to PIN diode 107 so that a positive bias voltage on the receiver RF line is blocked from ground. For negative bias voltages on the receiver RF line, the decoupling capacitor 108 has to be connected in series with PIN diode 106.

The capacity of the decoupling capacitor 108 does not influence the RF behaviour of the protection circuit negatively. Assumed, the effective capacitance of a PIN diode is $C_P$ and the capacity of the decoupling capacitor is $C_D$; then the total capacity $C_T$ of both components connected in series is calculated to be:

$$C_T = \frac{C_P C_D}{C_P + C_D}; \qquad (1)$$

$C_T$ is even smaller than $C_D$, which can be deduced from the relation

$$\frac{C_T}{C_D} = \frac{C_P}{C_P + C_D} < 1 ; \qquad (2)$$

thus improving the RF characteristic of the PIN diode transient voltage suppressor.

The path for an ESD on a PCB 100 of Fig. 1a when protected by a transient voltage suppressor circuit shown in Fig. 2 is illustrated in Fig. 1b and Fig. 1c, respectively. Fig. 1b shows the situation for an ESD with negative sparks. The electrostatic discharge enters the PCB 100 at the RF connector 101 and propagates along the antenna line to the middle lead of the antenna switch 102. It then passes the switch 102 without damaging it for the lead being connected to the receiver RF line and is there shorted to ground potential available at the middle lead at the bottom side of the switch 102 by PIN diode 106.

Negative sparks of an ESD take the same path from the RF connector 101 to the lead of the switch 102 being connected to the receiver RF line, but are then shorted via PIN diode 107 and decoupling capacitor 108 to ground potential available through a contact pad on the right edge of the PCB 100 as shown in Fig. 1c. The capacity of the decoupling capacitor is sufficiently high (some 100pF) to let the surge pass at a low impedance.

The present invention provides a robust protection of mobile communication devices against hazard from electrostatic discharge wherein no transmission insertion losses or a reduced transmission signal quality have to be accepted, and a very low sensitivity loss below 0.5dB by preserving the receive signal quality is achieved.

**Claims**

1. A mobile communication device for a wireless communication system comprising

   - a transmitter circuitry for transmitting signals,
   - a receiver circuitry for receiving signals,
   - an antenna line,
   - a switch (102) for connecting the antenna line either to the receiver circuitry or to the transmitter circuitry, and
   - a protection circuit (106, 107, 108) for protecting electronic circuitry of the mobile communication device from damage caused by an electrostatic discharge

   **characterised in**
   **that** if the mobile communication device is not in the transmitting mode, the switch (102) is per default in a position in which it connects the antenna line to the receiver circuitry, and the line connecting the switch to the receiver circuitry is protected by the protection circuit (106, 107, 108).

2. A mobile communication device according to claim 1,
   **characterised in,**
   **that** the protection circuit is a transient voltage suppressor (106, 107, 108).

3. A mobile communication device according to claim 2,
   **characterised in**
   **that** the transient voltage suppressor is implemented using a PIN diode (106, 107).

4. A mobile communication device according to claim 3,
   **characterised in**
   **that** two PIN diodes (106, 107) arranged in antiparallel form the transient voltage suppressor.

5. A mobile communication device according to claim 3 or 4,
   **characterised in**
   **that** at least one PIN diode (107) is arranged in series with a low frequency block (108).

6. A mobile communication device according to claim 3, 4 or 5,
   **characterised in**
   **that** the low frequency block (108) is implemented using a capacitance.

7. A method for protecting a mobile communication device against damage caused by electrostatic discharge comprising the step of
   connecting the antenna line of the mobile communication device to the receiver circuitry of the mobile communication device each time the mobile communication device is not in transmitting mode, whereby the line connecting the antenna switch (102) with the receiver circuitry is connected to a protection circuit (106, 107, 108) for providing protection against electrostatic discharge.

Fig. 1

Fig. 2

**European Patent Office**

## EUROPEAN SEARCH REPORT

Application Number

EP 01 12 3667

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 195 535 B1 (KURCHUK BORIS) 27 February 2001 (2001-02-27) | 1,2,7 | H04M1/74 |
| Y | * column 1, line 15 - line 25 * * column 2, line 30 - column 5, line 41 * * abstract; figures 2,3 * | 3-6 | |
| X | US 5 717 558 A (LYNN DALE EVERETT ET AL) 10 February 1998 (1998-02-10) * column 2, line 13 - column 6, line 3 * * abstract; figure 1 * | 1,2,7 | |
| Y | US 6 147 853 A (BERTHIOT DENIS) 14 November 2000 (2000-11-14) * column 2, line 50 - column 4, line 30 * * abstract; figures 3,4 * | 3-6 | |
| A | US 6 111 734 A (POLGREEN THOMAS L ET AL) 29 August 2000 (2000-08-29) * column 1, line 65 - column 2, line 20 * * abstract; figure 2 * | 2-6 | |
| A | EP 1 037 308 A (ERICSSON TELEFON AB L M) 20 September 2000 (2000-09-20) * column 1, line 1 - column 2, line 31 * * abstract; figures 1,4 * | 2-6 | TECHNICAL FIELDS SEARCHED (Int.Cl.7) H04M H02H H01Q H04B |

The present search report has been drawn up for all claims

| Place of search | Date of completion of the search | Examiner |
|---|---|---|
| MUNICH | 7 May 2002 | Pinilla-Ariza, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 01 12 3667

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2002

| Patent document cited in search report | | Publication date | Patent family member(s) | | Publication date |
|---|---|---|---|---|---|
| US 6195535 | B1 | 27-02-2001 | NONE | | |
| US 5717558 | A | 10-02-1998 | CA | 2185047 A1 | 31-05-1997 |
| US 6147853 | A | 14-11-2000 | FR | 2769142 A1 | 02-04-1999 |
| | | | EP | 0905852 A1 | 31-03-1999 |
| | | | JP | 2988480 B2 | 13-12-1999 |
| | | | JP | 11168175 A | 22-06-1999 |
| | | | US | 6304126 B1 | 16-10-2001 |
| US 6111734 | A | 29-08-2000 | NONE | | |
| EP 1037308 | A | 20-09-2000 | EP | 1037308 A1 | 20-09-2000 |
| | | | AU | 4102500 A | 09-10-2000 |
| | | | BR | 0009091 A | 08-01-2002 |
| | | | CN | 1344431 T | 10-04-2002 |
| | | | WO | 0057515 A1 | 28-09-2000 |